# EUROPEAN PATENT APPLICATION

(11) **EP 1 273 561 A1**
(43) Date of publication of application: **08.01.2003**
(21) Application number: 01912410.6
(22) Date of filing: 15.03.2001
(51) Int. Cl.: C05F 17/00, C02F 11/04, B09B 3/00, C12N 1/00

(54) **METHOD AND APPARATUS FOR PRODUCING ORGANIC FERTILIZER**

(30) Priority: 15.03.2000 JP 2000072258; 10.07.2000 JP 2000209137
(71) Applicant: Japan Noble Systems Inc., Tokyo 105-0004 (JP)
(72) Inventor: SHIMOSE, Shinichi, Asa-gun, Yamaguchi 757-0011 (JP)
(74) Representative: Brown, Kenneth Richard
(86) International application number: JP0102072
(87) International publication number: WO01068563

(57) **Abstract**

Disclosed is an manufacturing method of organic fertilizer of the present invention, wherein moisturized organic wastes and microbe, which decomposed organic materials so as to compost, are mixedly contained in a container (3) which can be sealed but also freely opened and closed, the container (3) is heated as well as decompressed by closing the container (3), the boiling point of water in the container (3) is set below the fermentation heat of the organic wastes caused by the microbe in decomposing the organic materials, and the moisture in the organic wastes in the container (3) ins vaporized and exhausted, whereby an organic fertilizer is manufactured by the decomposition of the organic materials. Thereby, a technique where the process to manufacture the organic fertilizer from organic wastes is efficiently conducted in a short period of time is provided.

## Description

### Field of the Invention

The present invention relates to a technique for particularly disposing organic wastes, more specifically producing organic fertilizer from livestock dung such as cow dung, etc., or organic waste such as sewage sludge, etc. Moreover, the present invention relates to a technique of producing a disposing microbe suitable for such disposal as fermentation of organic waste. In particular, the present invention relates to the technique of producing disposing microbe suitable for the disposal of organic materials in a short time.

### Background of the Art

In general, conventionally, if water-containing organic waste, such as livestock dung or sewage sludge, etc., is disposed, or additionally made into organic fertilizer, the above organic waste and dried agent are charged into a containing chamber such as a hollow drum, etc., and the organic waste, dried agents and organic materials are decomposed by rotating the drum to stir and mix the microbes (fermenting microbes such as indigenous microbes) that make the organic waste to organic fertilizer so that the moisture percentage of the mixture is adjusted to become approximately 60% to 65% (moisture adjustment), and the mixture, with the moisture percentage of approximately 60% to 65%, is primarily fermented under the high-temperature conditions, and then secondarily thermally fermented, at the same time, to produce the organic fertilizer.

At that moment, the above moisture adjustment is conducted to decrease the moisture in the mixture to prevent the corrosion of organic fertilizer, as well as to enlarge the surface of the organic waste where the fermenting microbes are implanted, as much as possible, in order to promote the decomposition (fermentation) of the organic materials. Nevertheless, the above mixture has a defect that it does not comprise enough surfaces to implant the fermenting microbes and, accordingly, it takes a long time to produce organic fertilizer.

Secondly, there is a problem concerning production of the disposing microbes suitable for disposing the organic materials. These processing microbes are called "microorganism group". If organic fertilizer is produced by disposing the organic waste, the microorganism group suitable for a specific organic waste is required to be produced. However, in general, it takes several months or more to produce this microorganism group.

### Disclosure of the Invention

Therefore, to solve these problems, an objective of the present invention is to provide a technique for producing an organic fertilizer from organic waste in a short time with good efficiency, and particularly, to provide an apparatus and method for producing a microorganism group suitable for disposal of the organic wastes in a short time with good efficiency.

A method for producing an organic fertilizer of the present invention in order to solve the above problems is characterized in that, firstly, it comprises mixing-and holding water-containing organic waste and microbes decomposing organic materials into a compost in a containing chamber 3 which is easy-to-open-and-shut airtightly, closing the chamber3, and heating in combination with evacuating the chamber 3 in such a manner that the boiling temperature of the water in the chamber 3 is not higher than that is caused by the heat of fermentation of the organic waste due to the heat of decomposition of organic materials by the above microbes, to thereby vaporize the water in the waste in the chamber 3 and at the same time produce an organic fertilizer through the decomposition of organic materials.

Secondly, a method for producing organic fertilizer of the present invention is characterized in that the moisture exhausted from the organic waste is condensed by the heat exchange with cooling water outside the containing chamber 3, the above cooling water is air-cooled and circulated, and the water that is caused by the above condensation is provided into a circulation route of the cooling water as makeup water of the cooling-water.

Thirdly, a method for producing organic fertilizer of the present invention is characterized in that the cooling water is deodorized in the circulation route of the cooling water.

Meanwhile, an apparatus for producing organic fertilizer of the present invention is characterized in that firstly, it comprises a containing chamber 3 where water-containing organic waste and microbes decomposing organic materials into a compost, a boiler 2 for heating the containing chamber 3 and a stirring part 9 for mixing the above organic waste and microbes into the containing chamber 3, wherein the above containing chamber 3 is constituted to be easy-to-open-and-shut, and connected with a decompressing apparatus 4 for decompressing the atmospheric pressure, and the decompressing apparatus 4 is driven in such a manner that the boiling temperature of the water in the chamber 3 is not higher than that is caused by the heat of fermentation of the organic waste due to the heat of decomposition of organic materials by the above microbes.

Secondly, an apparatus for producing organic fertilizer of the present invention comprises a condensing apparatus 6 for liquefying the moisture by connecting with the containing chamber 3 side, and a guiding part 12 for guiding moisture caused by decompressing inside of the containing chamber 3 between the condensing apparatus 6 and the containing chamber 3, wherein the above condensing apparatus 6 liquefies the circulating cooling water and the above moisture by exchanging heat.

Thirdly, an apparatus for producing organic fertilizer of the present invention comprises a cooling apparatus 16 for air-cooling the cooling water into the circulating route for the cooling water and a leading part for leading the liquid moisture that is caused by condensation between the condensing part 6 and the containing chamber 3 inside the circulating route for the cooling water.

Fourthly, an apparatus for producing organic fertilizer of the present invention is characterized in that the condensing apparatus 6 comprises a moisture passage 13 and a cooling water passage 14 independent of each other, both passages 13 and 14 are adjacently set up so as to exchange heat between the moisture and the cooling water. The moisture passage 13 comprises an exhaust port 6a for exhausting liquid moisture that is caused by condensation and a vacuum pump 4 in the form of stream, which is driven by the stream in the exhaust port 6a, and the output stream of the vacuum pump 4 is exhausted into the circulating route of the cooling water.

Furthermore, the present invention relates to a method for producing microbes to decompose organic materials and is characterized in that the above method for producing organic fertilizer is employed to produce microbes suitable for disposing organic waste comprising a process of producing basic raw microbes for decomposing the organic materials and a process of producing microbes suitable for the disposal of the processing material by adding the processing material to the incubation material of the basic raw microbes. More specifically, the present invention is a method for producing microbes suitable for disposal of the organic waste, which comprises mixing and holding an organic substrate including a water-containing organic waste to be disposed and microbes suitable for disposing organic waste into a compost in a containing chamber 3 which is easy-to-open-and shut airtightly, closing the chamber 3, and heating in combination with evacuating the chamber 3 in such a manner that the boiling temperature of the water in the chamber 3 is not higher than that is caused by the heat of fermentation of the organic substrate due to the heat of decomposition of organic materials by the above microbes, to thereby vaporize the water in the organic substrate in the containing chamber 3 and at the same time incubate microbes and divide the microbes from the containing chamber 3.

The preferred mode of the present production method is to mix the materials by which the microbes obtain tolerance with the organic substrate upon the incubation of the microbes. The preferred embodiment of the material is the environmental factor, for example, in regions near the coast, salt is mixed with organic substrates as the microbes are tolerant of salinity (salt damage tolerant microbes). Further, seawater may be used in the place of salt. In addition, in the volcanic region, volcanic ash is mixed to organic substrates instead of or together with salt. The quantity of the environmental factor mixed to the organic substrates, such as salt or volcanic ash, by which the environment of each region is characterized, is within the scope the incubation of microbes and are not adversely affected. The quantity of the environmental factor will be determined from time to time under the review of the person skilled in the art.

The other preferred mode of the method for producing microbes comprises a process for incubating/producing microbes, and for incubating/producing basic raw microbes, and a process for incubating/producing microbes suitable for disposing, decomposing and fermenting the organic waste, in other words, microbes tolerant to organic wastes by mixing the organic waste disposed after incubating/producing basic raw microbes.

The microbes are produced by employing the above producing apparatus used for producing organic fertilizer.

Moreover, the present invention relates to a method for decomposing and disposing organic waste, in place of producing organic fertilizer, and comprises mixing and holding water-containing organic waste and microbes, decomposing organic materials into a compost in the containing chamber 3, which is easy-to-open-and-shut airtightly, closing the chamber 3, and heating in combination with evacuating the chamber 3 in such a manner that the boiling temperature of the water in the chamber 3 is not higher than that caused by the heat of fermentation of the organic waste due to the heat of decomposition of organic materials by the above microbes, to thereby vaporize the water in the waste in the chamber 3 and at the same time to produce an organic fertilizer through the decomposition of organic materials. This method is conducted by employing the above producing apparatus used upon producing organic fertilizer.

### Brief Description of Drawings

Fig. 1 is a schematic diagram for a system of an apparatus for producing organic fertilizer.
Fig. 2 is a flowchart illustrating a process of producing organic fertilizer.
Fig. 3 is a flowchart of an example illustrating another process of producing organic fertilizer.
Fig. 4 (a), (b) and (c) are respectively a plan view, front elevational view and side elevational view of a body.
Fig. 5 (a) and (b) are respectively a sectional plan view and side elevational view of a substantial part of a stirring part.
Fig. 6 is a front elevational view of a ejecting port of a drum.
Fig. 7 is a sectional view of an essential part of a drum.
Fig. 8 is a side elevational view of an essential part of a body illustrating a pipe condition of steam.
Fig. 9 is a sectional view of an essential part of a guiding part.
Fig. 10 (a) and (b) are respectively a front sectional view and side elevational view of an essential part of a condensing part.
Fig. 11 is a side elevational view of a vacuum pump.
Fig. 12 (a), (b) and (c) is respectively a plan view, front elevational view and a side elevational view of a cooling tower.
Fig. 13 is a plan view of a plant in which organic fertilizer is produced.
Fig. 14 (a) and (b) are respectively a sectional plan view and side elevational view of an essential part of a stirring part.

### Mode for Carrying Out the Invention

Described below is a method and an apparatus for producing organic fertilizer of the present invention in reference to the drawings.

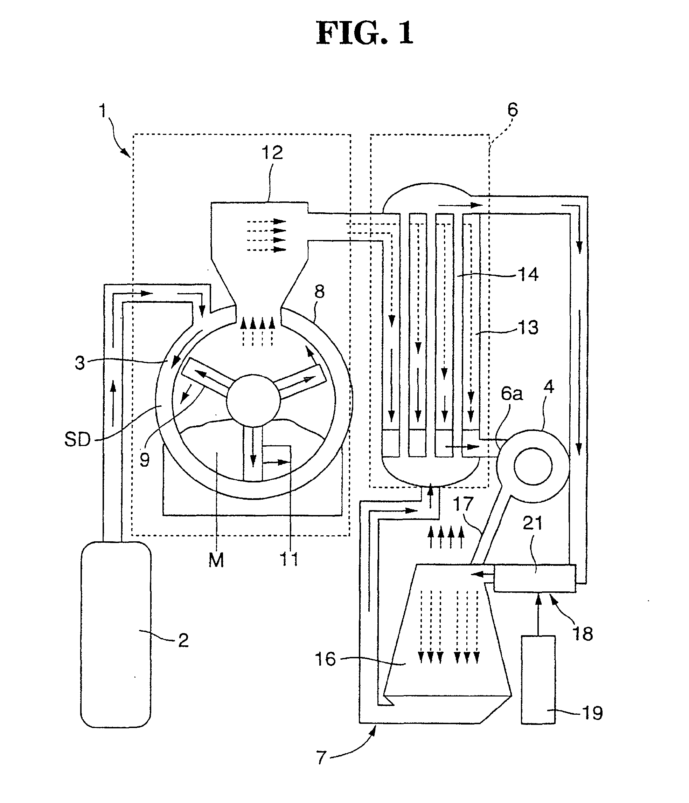

Fig. 1 is a schematic diagram of a system illustrating the structure of an apparatus for producing organic fertilizer, and the apparatus for producing organic fertilizer comprises a body 1 in which water-containing organic waste (raw materials) such as livestock dung are contained, a boiler 2 which is a boiler for heating the body 1, a vacuum pump 4 which is a decompressing apparatus for decompressing the atmosphere pressure within the containing chamber 3 for raw materials in the body 1, a condensing part 6 for condensing moisture (vapor) and a circulating part 7 for circulating the moisture (liquid) that is generated by the condensing part 6, and is constituted so as to produce organic fertilizer from raw materials within the body 1 (containing chamber 3).

More specifically, the above producing apparatus is for producing organic fertilizer and disposing moisture that is caused by producing organic fertilizer described below, and is constituted so as to concurrently conduct a process for producing organic fertilizer and a process for exhausting moisture (moisture exhausting process). Next, the process of producing organic fertilizer and the process for exhausting moisture are specifically described. It should be noted that below described is a case where raw materials are in a moisturized solid such as livestock dung.

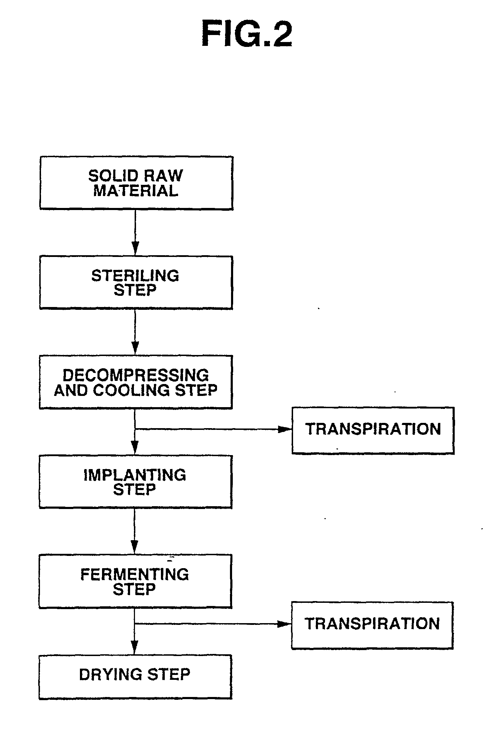

Firstly, the process of producing organic fertilizer, as shown in a flow chart of Fig 2, comprises a sterilizing process for sterilizing the raw materials, a decompressing cooling process for incorporating dissolved oxygen into the raw materials, a microbe implanting process for mixing microbes (fermenting microbes) and decomposing organic substrates, a fermenting process for decomposing (fermenting) the organic substrates of the raw materials into a compost by fermenting microbes and a drying process for drying the raw materials, the fermentation of which is almost completed (almost fertilized), and organic fertilizer is produced after each process. It should be noted that the above fermenting microbes are soil fungi for fertilizing organic wastes by decomposing organic substrates.

The above sterilizing process comprises heating the body 1 by the boiler 2, charging the raw materials M into the containing chamber 3 of the body 1, and closing the containing chamber 3. At such time, the containing chamber 3 is constituted of a cylindrical drum 8 (in the containing chamber 3) which is supported by a shaft flexible in rotation for stirring the raw materials M, and peripheral wall of the drum 8 and the stirring part 9 are heated by steam at approximately 115°C to 120°C from the boiler.

Moreover, the drum 8 comprises a charging port which is easy-to-open-and-shut in order to charge the raw materials M, and the raw materials M can be charged into the drum 8 from the charge port. Thereby, although the raw materials M contained in the containing chamber 3 is heated to turn the moisture contained in the raw materials M into steam, as the containing chamber 3 is closed, the inside of the containing chamber 3 is pressed (up of the pressure) and the temperature in the containing chamber 3 containing the raw materials M attains up to 115°C to 120°C that is almost same as the peripheral wall of the drum 8 and the stirring part 9, and then the putrefying bacteria or pathogenic bacteria becomes almost extinct.

Next, the decompressing cooling process comprises firstly activating the above vacuum pump 4, reducing the pressure in the containing chamber 3 up to approximately -300 to -400mmHg in such a manner that the boiling temperature of the water in the containing chamber 3 comes 50 to 70°C. Thereby, the water of the raw materials M, that is heated as described above, becomes steam and is exhausted from the containing chamber 3 together with air by the vacuuming operation of the vacuum pump 4 as well as the contraction of the raw materials M is carried out by the reduction of the pressure.

After the moisture percentage of the raw materials M becomes approximately 65%, the reduction of pressure above described is released, the air pressure in the containing chamber 3 is moved back one pressure (approximately 760mmHg) and thereby, the raw materials M that are contracted are swelled and, at the same time, the dissolved oxygen is taken into the raw materials M. As the above principle, in the decompressing cooling process a lot of dissolved oxygen are taken into the raw materials M. It should be noted that depending on the kind of the raw materials, it is possible to omit the process to move back the pressure, and take the' dissolved oxygen into the raw materials M by decreasing the air pressure of the raw materials M.

Furthermore, the microbes implanting process is for charging the fermenting microbes, as described above, from the charging port of the raw materials in the drum 8, and the air pressure in the containing chamber 3 is 1 atm before the microbes implanting process, so that it is easy to charge the fermenting microbes into the drum 8. It should be noted that as the air pressure in the containing chamber 3 is set 1 atm just before the microbes implanting process as described above, it is necessary to charge the fermenting microbes in the short time as much as possible and to prevent the temperature of the raw materials from increasing more than required because there is possibility that the charged fermenting microbes become extinct due to the increase of the temperature of the raw materials if it takes a long time to implant the microbes.

The fermenting process comprises re-closing the charging port of the drum 8 to close the containing chamber 3, driving the vacuum pump 4, and decompressing the containing chamber 3 to approximately -300 to -400mmHg, and thereby making the boiling temperature of water in the containing chamber 3 50°C through 70°C. Herewith, the water of the raw materials M in the containing chamber 3 (after mixing with the fermenting microbes) becomes steam and is exhausted from the containing chamber 3 as the decompressing cooling process, the moisture percentage of the raw materials M decreases (dried) as well as the organic materials are decomposed (fermented) by the fermenting microbes.

As the heat of the raw materials M is stabilized to approximately 60°C to 80°C, which is the peak of the heat of fermentation at the time of the fermentation after the fermenting process and the temperature of the raw materials M becomes higher than the boiling temperature, the water in the raw materials M is continuously vaporized and the fermenting microbes are attached (implanted) to the part where the water in the raw materials M is exhausted to continuously ferment the raw materials M. At this time, in the apparatus of the present invention, the water is released not only from the surface of the raw materials M but also from inside of a piece of the raw materials M in order to maintain the pressure of the inside in which the raw materials M is contained (in the containing chamber 3) to the depressed condition.

Therefore, the raw materials M are efficiently dried (vacuum drying), the surface of the raw materials M, to which the fermenting microbes are attached, is dramatically enlarged, and, thereby, the first fermentation with the heat generation of approximately 60 to 80°C is conducted in a considerably short time. It should be noted that although the peripheral wall of the drum 8 and the stirring part 9 are heated at the temperature of approximately 115 to 120°C by the boiler 2, as above described, the temperature of the raw materials M is kept to approximately 60°C to 80°C, which is the peak of the heat of fermentation by the living activities of the fermenting microbes, and heat energy provided from the peripheral wall of the drum 8 and the stirring part 9 is used to prevent the temperature of the raw materials M from decreasing.

Moreover, the fermentation process comprises rotating the stirring part 9 and stirring the raw materials M in the drum 8 by a blade part 11 of the stirring part 9 mainly in order to provide a lot of dissolved oxygen into the raw materials M rather than to increase the area of the raw materials M, to which the fermenting microbes are attached, by stirring (consequently increasing the area). Accordingly, it is enough to stir the raw materials M in order to move the raw materials M to the direction of the shaft center, and it is not required that the raw materials M be frequently stirred.

The heat of fermentation of the raw materials M, more specifically, the raw materials themselves in the fermenting condition, becomes the heat source of the vacuum drying, and the raw materials M is dried (moisture adjustment) to conduct the first fermentation, and then with the decrease of the moisture percentage of the raw materials M, the fermenting process is generally changed from the aerobic first fermentation to anaerobic second fermentation, thereafter the fermentation comes to the standstill. In the apparatus of the present invention, the first fermentation and the second fermentation is conducted in the containing chamber 3 so as to conduct the moisture adjustment of the raw materials M with good efficiency and in a short time.

Next, concerning the drying process, the drying process comprises adjusting the moisture percentage so as to further complete the raw materials M as an organic fertilizer (to make the raw materials M available organic fertilizer), the fermenting condition (the second fermentation), of which is almost completed (even at this stage, the raw materials M is almost completed as organic fertilizer) at the end of the fermenting process, and is continuously conducted from the fermenting process without any specific operation such as change of the setup.

As described above, the organic fertilizer is produced from the raw materials M through each process, and after the drying process, the rotation of the stirring part 9 is stopped, and the vacuum pump 4 is stopped to release the decompression in the containing chamber 3, and thereby the organic fertilizer can be removed from an ejecting port arranged in the drum 8. In addition, the ejecting port is arranged at the edge of the drum 8, and the organic fertilizer to be produced can be automatically exhausted from the ejecting port by rotating the stirring part 9 as described below.

Next, described is a waste water disposing process. The waste water disposing process comprises a condensing process for the water that is caused in the producing process of the organic fertilizer from moisture (gas) to water (liquid) in a condensing part 6 and a circulating process of the water (waste water) that is caused by the condensation so as not to exhaust the waste water that is caused by the above producing process outside the apparatus for producing organic fertilizer in a liquid condition.

The condensing process comprises introducing the moisture in the containing chamber 3 that is caused by driving the vacuum pump 4 (decompression in the containing chamber 3) to the condensing part 6 through a guiding part 12 by which the condensing part 6 and the drum 8 are spatially connected each other, and liquefying (namely; condensed) the moisture in such a manner that the temperature of the moisture is not higher than the boiling temperature by heat-exchange with the cooling water installed into the condensing part 6.

At such time, the condensing part 6 comprises the moisture passage 13 for passing the moisture and a cooling water passage 14 for passing the cooling water independently (in order to prevent from direct contact between moisture and cooling water), and is constructed so as to contact the moisture passage 13 with the cooling water passage 14 for heat-exchange, and liquefy the moisture in the moisture passage 13 by the heat-exchange.

The circulating process is a process for circulating the cooling water provided to the condensing part 6 as well as the moisture (liquid) that is caused in the moisture passage 13 between the condensing part 6 and the circulating part 7 as a part of the cooling water, providing the condensing part 6 with the cooling water at the temperature of approximately from a cooling tower 16, the temperature of which is approximately 28°C (average summer temperature in Japan) is provided to the condensing part 6 from the cooling tower 16 and, at the same time ejecting the cooling water heated by heat-exchange with moisture in the condensing process from the condensing part 6 or ejecting the condensing water, that has occurred from the condensing part 6, and thereafter, returning the cooling water to the cooling tower 1 to be re-cooled.

The cooling tower 16 is a conventionally publicly known air cooling type, and constituted in order to create the air flow by taking into the air around cooling tower 16 by a fan established to the cooling tower 16 as well as exhausting the air from the upside so as to cool the water (liquid) that passes into the cooling tower 16.

Therefore, a part of the cooling water is evaporated and exhausted from the (air cooling typed) cooling tower 16 and, accordingly, the cooling tower 16 is generally provided with the makeup water of the cooling water. In this embodiment, the present invention comprises a exhausting passage 17 compulsory supplying the water, that is liquefied by the condensing process between the condensing part 6 and the cooling tower 16, more specifically, provides the makeup water and the waste water from the condensing part 6 to the cooling tower 16 as cooling water for the makeup.

Moisture that is created in the producing process by the waste water disposing process, as described above, is liquefied (condensed) to be used as makeup (or replenishing) water of cooling water, and, thereby, the waste water is recycled instead of being exhausted in liquid condition. However, although the cooling water is vaporized from the cooling tower 16, as described above, as the waste water is consequently evaporated and exhausted, the waste water includes any impurity, which generates bad smell, which may be generated from the cooling tower 16.

Accordingly, the apparatus for producing organic fertilizer of the present invention comprises a deodorizing apparatus 18 into the circulating passage of the cooling water for removing bad smell exhausted as a gas from the cooling tower 16, by which bad smell of the cooling water is removed to prevent the exhaustion of gas with bad smell.

Moreover, in this embodiment, the containing chamber 3 and the moisture passage 13 are spatially communicated, and the vacuum pump 4 takes on a vacuum pump in the form of stream of an aspirator-type (spiral type pump), which is established to a exhausting port 6a for the waste water (condensed water) of the condensing part 6. That is, upon activating the vacuum pump 4 (decompressing inside of the containing chamber 3), the containing chamber 3 and the moisture passage 13 are decompressed in the equal pressure and the moisture in the containing chamber 3 is aspirated into the moisture passage 13 by the vacuum power of the vacuum pump 4.

The moisture (waste water) liquefied within the moisture passage 13 as described above is aspirated into the vacuum pump 4 and exhausted to the exhausting part of the vacuum pump 4, which is connected to the cooling tower 16, and the waste water accumulated within the moisture passage 13 is furnished to the cooling tower 16.

The deodorizing apparatus 18 comprises an ozonator 19 and a mixing machine 21, in which the ozone that is generated by the ozonator 19 is mixed with the circulating cooling water, and conducts ozone deodorization by subjecting the cooling water to an ozone water treatment.

The apparatus for producing organic fertilizer of the present invention produces the organic fertilizer from organic waste through the foregoing processes, enlarges the area to which the fermenting microbes of the raw materials are attached by the moisture adjustment of the raw materials through the vacuum drying as well as attaches the fermenting microbes to the depth of the mass of the raw materials. Moreover, the apparatus of the present invention produces organic fertilizer from organic waste in a very short time, as the moisture adjustment is conducted with the fermentation (first fermentation), and thereby the second fermentation is conducted in the containing chamber 3.

Furthermore, the apparatus for producing organic fertilizer of the present invention can recycle the condensed water (waste water) by using the water that occurs in the process of producing the organic fertilizer from the organic waste as cooling water (for supplying) without exhausting the water outside in the liquid condition, and effectively utilizes the resources and is referred to as a clean system.

It should be noted that as the cooling tower 16 takes in the air around the cooling tower 16 upon cooling the cooling water as described above, when there is strong smell in the air around the cooling tower 16, the apparatus of the present invention takes in the air with the strong smell, conducts deodorization with the circulation of the cooling water and performs as the deodorizing apparatus for the location circumstances of the system so as to keep the location circumstances of the system clean.

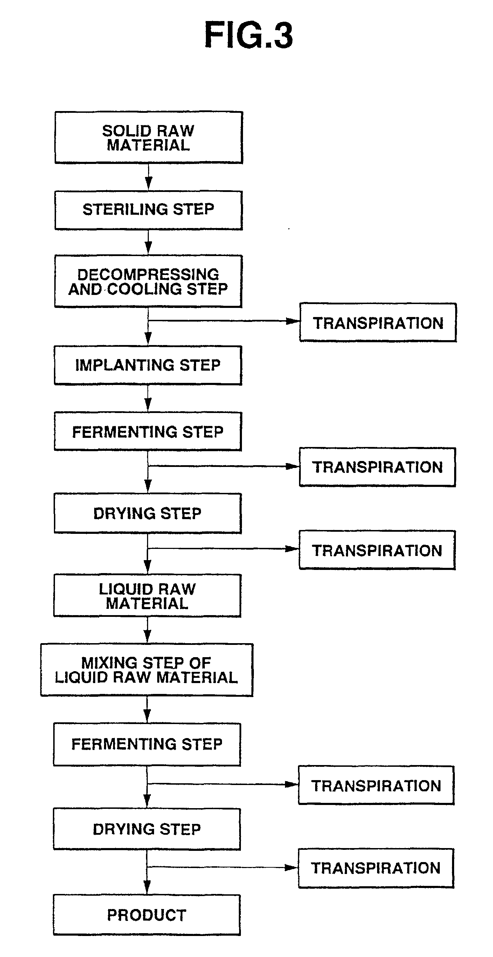

On the other hand, as shown in the flowchart of Fig. 3, the organic fertilizer may be reproduced by adding the raw material M to the drum 8, in which the raw material M (completed organic fertilizer) is completely produced and contained, and using the same producing process as above described without taking out the organic fertilizer produced through the above process from the body 1. In such case, as the base organic fertilizer remains into the containing chamber 3, the liquid raw materials (liquid raw materials) consisting of urine, etc. may be thrown to the remaining organic fertilizer.

More specifically, the apparatus of the present invention can produce the organic fertilizer from the liquid raw materials by throwing the liquid raw materials to the organic fertilizer contained into the containing chamber 3, re-increasing the moisture percentage of the organic fertilizer and using the same process as described in the embodiment to the organic fertilizer containing organic materials with high moisture percentage and not being decomposed, specifically the solid organic fertilizer that is made into the raw materials.

It should be noted that if the liquid raw materials are made into organic fertilizer as described above, the process of producing organic fertilizer may be enough to conduct the fermenting process and drying process, following the fermenting process, as the organic fertilizer, which would be a base upon charging the liquid raw materials has already been sterilized and the temperature of the organic materials and the containing chamber 3 is adjusted to be 50°C to 70°C and the organic fertilizer is implanted by the fermenting microbes.

Furthermore, if the liquid raw materials are charged into the containing chamber 3, the liquid raw materials must be charged by infiltration to the organic fertilizer (base), contained in the containing chamber 3 as the charged liquid raw materials evaporate, when it directly touches the periphery of the drum 8 or stirring part 9, etc.(as the periphery of the drum 8 or stirring part 9 is heated at the temperature of 115°C to 120°C).

That is, the liquid raw material may be solely made into the organic fertilizer by previously having contained the solid base, such as produced or completed organic fertilizer in the containing chamber 3 and charging liquid raw material, to be permeated to the base. Thereby, the apparatus for producing organic fertilizer may be adapted to waste water treatment or sewage treatment as well as decompose the waste water or sewage into organic fertilizer without bad smell upon decomposition thereof.

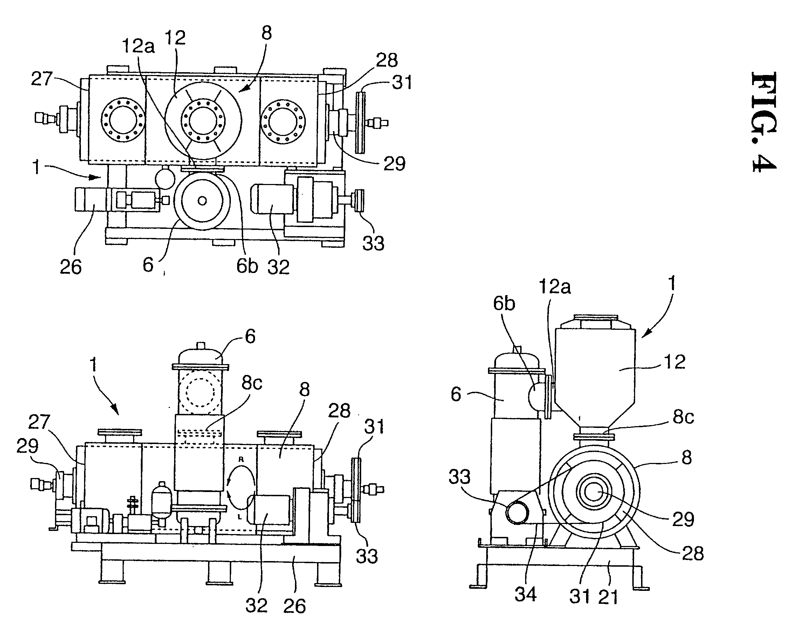

On the other hand, Fig. 4(a), (b), (c) are respectively a plan view, front elevational view and side elevational view of a Body 1, wherein a cylindrical drum 8 is fixed on a base frame 26, a guiding part 12 is attached to a ventilating port 8c that is arranged at the top of the drum 8, and the condensing part 6 is attached to the base frame 26 as well as a input port 6 of the condensing part 6b is connected to an ejecting port 12a that is attached at the side of the guiding part 12.

Within the drum 8, the stirring part 9 is provided at shafts on the both of the end face 27 and 28 of the drum 8, the both edges of a driving shaft 29 of the stirring part 9 are protruded from the end face 27 and 28 of the drum 8, and either end parts of the driving shaft 29 are attached by a sprocket 31. Further, a driving motor 32 for the stirring part 9 is fixed to the base frame 26, to which the sprocket 31 is connected by a sprocket 33, a belt 34 and the like that are provided at the driving shaft of the driving motor 32, and thereby the stirring part 9 may be driven by operating the driving motor 32.

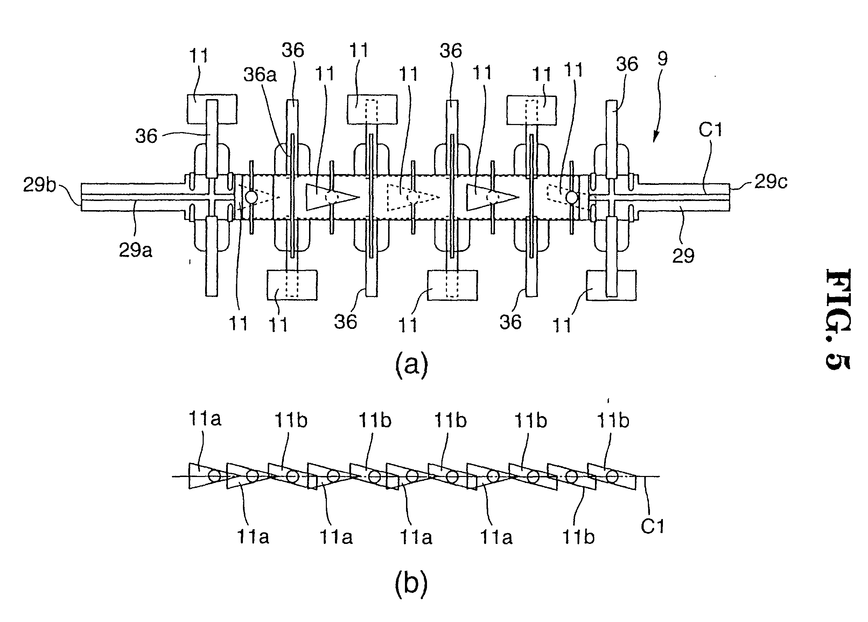

Fig. 5 explains an embodiment of the stirring part.

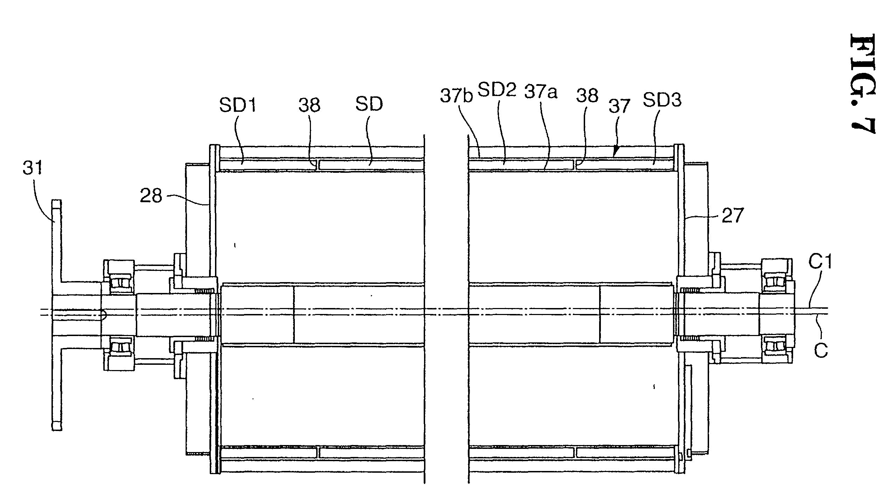

The stirring part 9 comprises an arm 36, which is radially protruded in the periphery of the driving shaft 29 which is arranged within the drum 8, and the top of the arm 36 comprises a blade part 11, in which the raw materials M are stirred. The stirring part 9 is provided at the shaft center C1 (refer to Fig.7) which is slightly biased to a shaft center C of the drum 8. Moreover, the stirring part 9 comprises stirring the raw materials M or exhausting of the completed organic fertilizer is conducted by rotating the driving shaft 29 with the motor 32 as shown above.

As shown in Fig 5 (b) , each of the blade part 11 constitute the triangle or rhombus, in case that it is laterally viewed, and in the intermediate part a blade part 11a (triangular blade) in the triangular shape, in case laterally viewed, and a blade part 11b (rhombic blade) in the rhombic shape, in case laterally viewed, are alternately arranged. Moreover, in the forward a plurality of the triangular blade 11a are successively arranged and in the rear a plurality of the rhombic blade 11b are successively arranged.

Hereby, when the driving shaft 29 is rotated in an predetermined direction, the raw materials M (or completed organic fertilizer) contained at the bottom of the drum 8 is moved to the center part of the stirring part 9 by the triangular blade 11a and the rhombic blade 11b, which are installed back and forth thereof, and at the same time in the center of the stirring part 9 the raw materials M are stirred to swing back and forth between the blade 11a and the blade 11b to incorporate much dissolved oxygen into the raw materials M by a successive pair of the triangular blade 11a and the rhombic blade 11b.

Moreover, when the driving shaft 29 is rotated in a reverse direction of the above predetermined direction, the stirring part 9 forms the screw bearing so that the raw materials M (or completed organic fertilizer) can be moved to one end face 27 of the drum 8. That is, when the direction of rotation of stirring the raw materials M (organic fertilizer) refers to the normal direction and the direction of rotation of moving the raw materials M to one direction refers to the reverse direction, the stirring part 9 can stir the raw material during producing the organic fertilizer by rotating the driving shaft 29 in the normal direction, and the completed organic fertilizer can be exhausted from the end face 27 of the drum 8 by rotating the driving shaft 29 in the reverse direction.

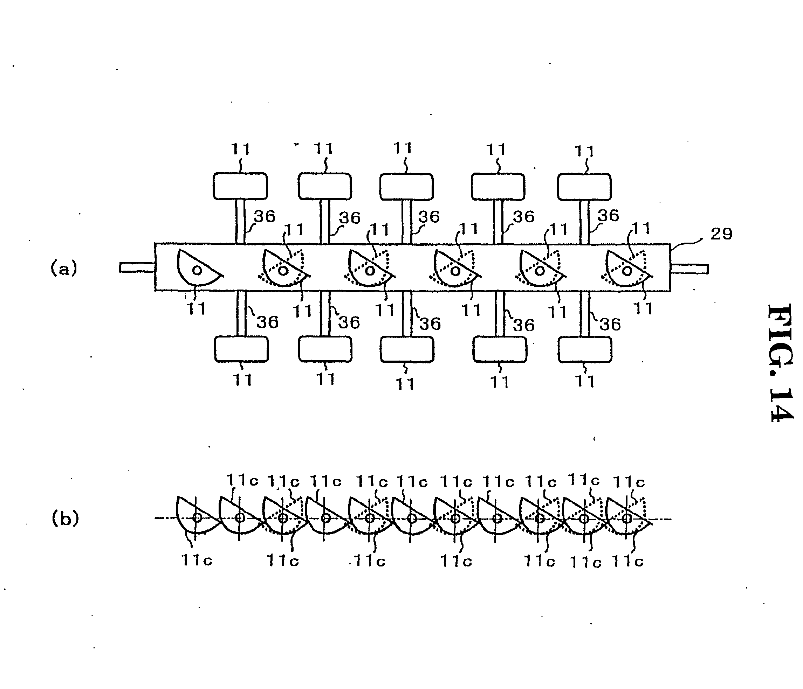

The embodiment of the stirring part 9 is not limited to the shape of each blade described in Fig. 5 and, for example in viewing from the side, may be the shape constituted by one overall convex piece formed from the curved line and the other overall straight line or grooved piece formed from the curved line. In Fig. 14, illustrated is an example where the stirring part is created by using the blade part 11c shaped by the straight line, which connects the termination of the circular arc.

As shown in Fig 14 (a), each of the blade part 11 is fixed to the both ends of arm 36 that pierces the driving shaft and is attached at the periphery of the driving shaft to be radially protruded. In Fig 14(b), explained is the arrangement of the blades by straightly displaying the blades that are, in fact, arranged in a symmetric arrangement to the central shaft of the rotation of the driving shaft 29. The edge of the straight line of the blade part, viewd from the side, forms the shape that continuously saw shape inclining from the upper left to the lower right as well as the other arched edge of the blade part, viewed from the side, forms the shape that is consisted of continuous wave shape.

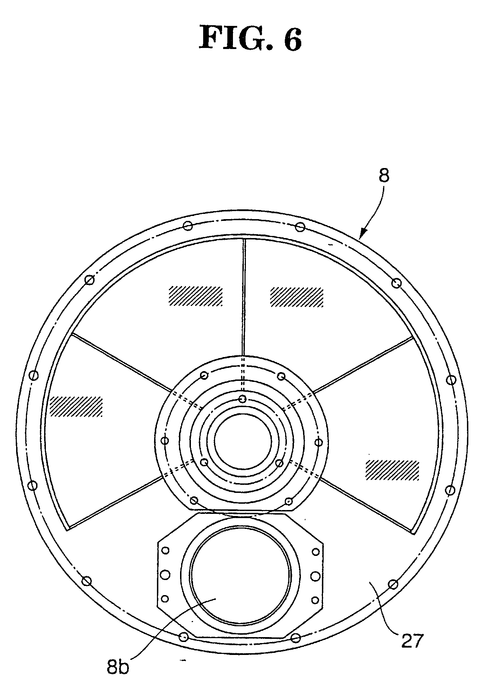

The edge of the drum 8 comprises the ejecting port 8b for the fertilizer, which is easy-to-open-and-shut at the lower part as described in Fig 6, and 'the completed organic fertilizer can automatically be removed from the ejecting port 8b by opening the ejecting port 8b and counterrotating the stirring part 9. It should be noted that the ejecting port 8b comprises an elastic member such as rubber at its edge, as well as a cover part, which is easy-to-open-and shut. Furthermore, the drum 8 comprises the projecting edge part forming a generally M-shaped section at the opposite side of the ejecting port 8b on the cover part.

Herewith, when the cover part is arranged at the side of the ejecting port 8b, the projecting part is pressed to the side of the elastic member so that the edge part removes dirt attached to the ejecting port 8b upon outputting the organic fertilizer by the edge part and the sealing grade within the containing chamber 3 is retained.

Moreover, as shown in Fig 7, the peripheral wall 37 of the drum 8 is a double structure, and is constructed as a gap SD that is formed by an inside wall 37a and an outside wall 37b divided by a division wall 38. A center line C in Fig 7 is a shaft center of the driving shaft 29 in the stirring part 9.

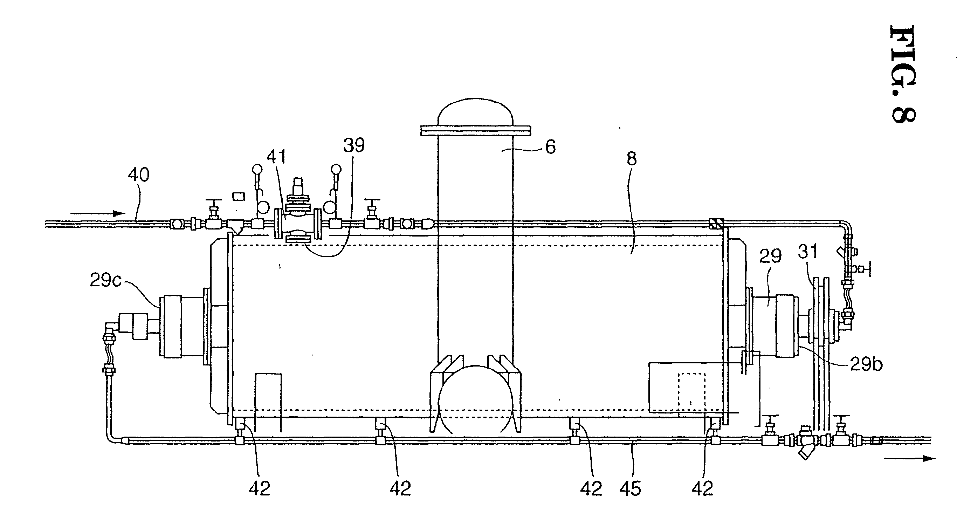

The division wall 38 partially comprises a pore for passing the gas, and the gaps SD1, SD2 and SD3 that are divided by the division wall 38 can be communicated with each other through the pore. As shown in Fig 8, at least one gap SD1 comprises an uptake part 39 for taking steam from the boiler into the gap SD and the uptake part 39 is connected with a steam outputting line 40 of the boiler 2 through a bulb 41. Each gap SD comprises an exhausting part 42 for the steam and each of the exhausting parts is connected with a drain line 45.

At this time, the boiler 2 outputs the steam at a temperature between about 115°C and 120°C, and thereby, the steam is sent to the gap SD that is formed within the peripheral wall 37 of the drum 8, the peripheral wall 37 of the drum 8 is heated, the heat energy is sent to the raw materials within the drum 8 (containing chamber 3) and heat is provided to the raw materials in each of the above producing processes.

The driving shaft 29 and the arm 36 of the stirring part 9 are hollow, and the hollow part 36a of the arm 36 and the hollow part 29a of the driving shaft 29 are spatially connected with each other, as well as a portion of the steam sent to the drum 8 is branched and introduced in the hollow part 29a of the driving shaft 29 and the stirring part 9 is also heated by the steam (boiler 2), as is the case with the drum 8. The steam adopted into the driving shaft 29 and the arm 36 is exhausted to drain through the other end face 29c of the driving shaft 29.

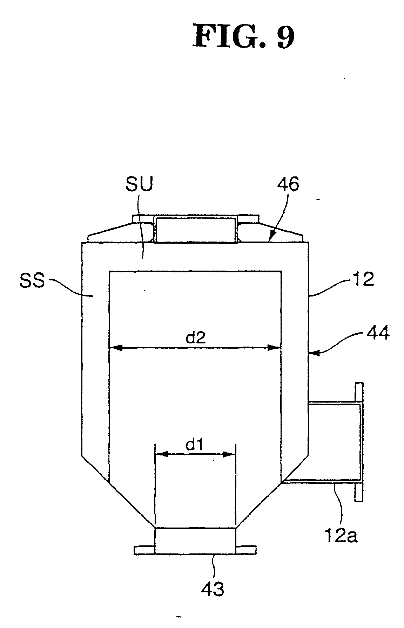

On the other hand, as described above, the drum 8 and the condensing part 6 is connected by the guiding part 12, the vapor that is generated in the drum 8 (containing chamber 3) is introduced into the condensing part 6 through the guiding part 12. A diameter d2 of the guiding part is larger than the diameter d1 of the guiding part 43 (d2>d1), as shown in Fig 9, so that a solid, the specific gravity of which is comparatively heavy, included in the vapor is crystalized and fallen down.

The guiding part 12, is also the double structure by the peripheral side 44 and upper face 46, is constituted as the vapor, that is introduced into the guiding part 12, is exhausted to the gap SS of the peripheral side through the upper gap SU. Hereby, a solid is also separated, and the vapor is exhausted to the condensing part 6 through the exhausting port 12a that is connected with the gap SS of the peripheral side. It should be noted that as the inside of the guiding part 12 is less subject to the air by virtue of the double structure described above, and some disadvantage such as the liquefaction of the vapor is avoided, even if the temperature of the surrounding air is comparatively low.

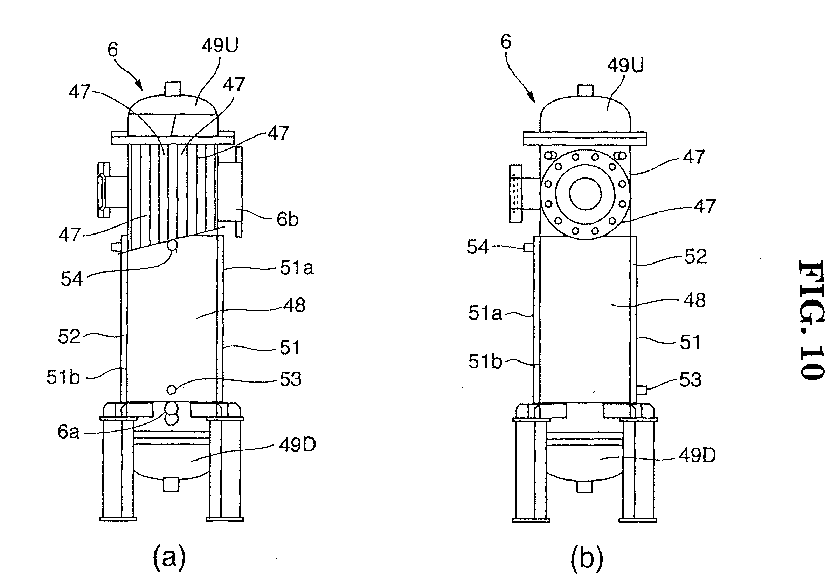

On the other hand, the condensing part 6, as shown in Fig 10, comprises the cooling water passage 14 consisting of a plurality of a vertical pipe 47 within the cylindrical main body 48, and is constructed so as to form the cooling water pool 49U and 49D that are communicating with the pipe 47 above and below the main body 48, to pour the cooling water into the lower sided cooling water pool 49D, and to exhaust the cooling water from the upper sided cooling water pool 49U, as well as to introduce the vapor from the guiding part 12 through the input port 6b into the main body 48 in which a plurality of pipe 47 are arranged.

Herewith, the vapor is cooled and liquefied by heat exchange with the cooling water and is pooled in the upper side of the cooling water pool 49D of the lower part in the main body 48. As both cooling water pools 49U and 49D, and the main body 48 are completely separated, the liquefied water and the cooling water are not mixed (contact) with each other, and the gap between the cooling water pool 49U and the cooling water pool 49D becomes the vapor passage 13, under which the condensed liquefied vapor(water) is pooled.

The periphery 51 between the cooling water pool 49U and 49D of the main body 48 is of double structure, and the cooling water is also circulated within the gap 52 between the outside periphery 51a and the inside periphery 51b from the lower sided cooling water adopting part 53 to the upper sided cooling water exhausting part 54. Accordingly, the vapor introduced into the moisture passage 13 is cooled and will be liquefied by the cooling water on the side of the periphery 51.

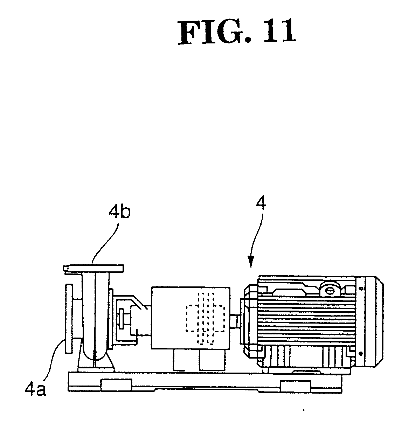

The vacuum pump 4 is connected with the exhausting port 6a, and thereby, the insides of the moisture passage 13, the guiding part 12 and the containing chamber 3 (drum 8) are equally decompressed. At this time, the vacuum pump 4, as described above and shown in Fig 11, is a turbinated pump, and an inhalation port 4a is connected with the exhausting port 6a of the condensing part 6 and a discharge port 4b is connected with the side of the input port of the cooling water in the cooling tower 16. Thereby, when the vacuum pump 4 is activated, as described above, the insides of the moisture passage 13, the guiding part 12 and the containing chamber 3 (drum 8) is equally decompressed as well as the liquefied vapor (water) pooled within the valor passage 13 (at the same pressure as within the containing chamber 3) is output to a cooling tower 16 through the vacuum pump 4.

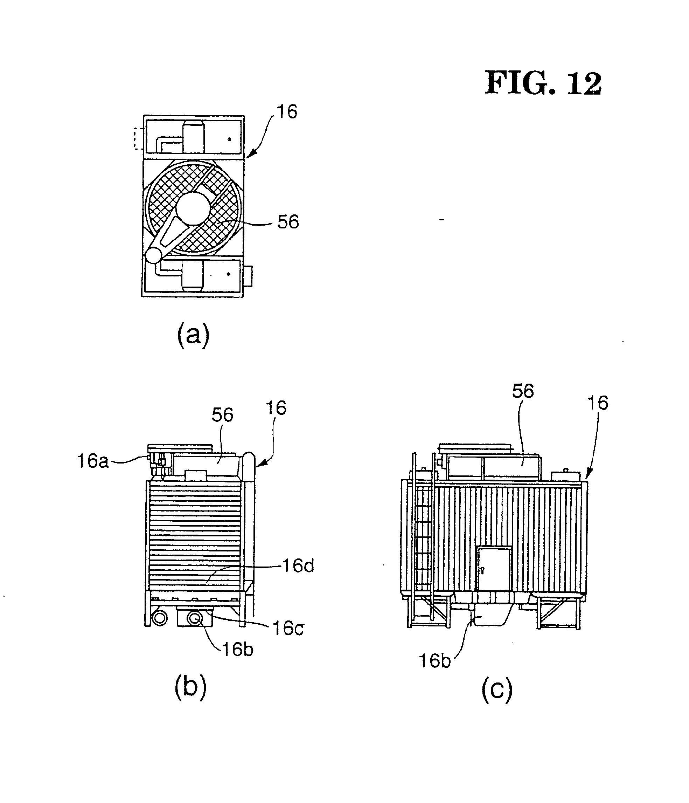

Then, the cooling tower 16 is, as shown in Fig 12, constructed so as to introduce the cooling water exhausted from the condensing part 6 into the input port 16a, as well as to spray the introduced cooling water from the top side of the cooling tower 16, to discharge the sprayed cooling water down below, to cool the cooling water by flow of air (airstream) that arises by a fan 56, arranged in the upper side of the cooling tower 16, and is introduced from the periphery of the cooling tower 16, exhausted to the upper side of the cooling tower 16, and to send the cooled cooling water to the condensing part 6 from the exhausting port 16b for the cooling water.

It should be noted that the makeup water is provided to the cooling tower 16 through an automatic supply port 16c due to the occurrence of the evaporation of the cooling water, and nearly, as is the case with the supply route, enables it to provide the condensed water that is condensed and generated in the condensing part 6 as makeup water from the condensed water providing port 16d. Thereby, the condensed water is recycled as makeup water of the cooling water, and in the system of this invention, the condensed water is not exhausted outside in liquid condition.

Although a figure is not shown, the present invention comprises an ozone producing machine 19 and a mixing machine 21 that mixes the ozone-generated from the ozone producing machine 19 and the cooling water, and is constituted so as to generate ozone water from the cooling water without bad smell.

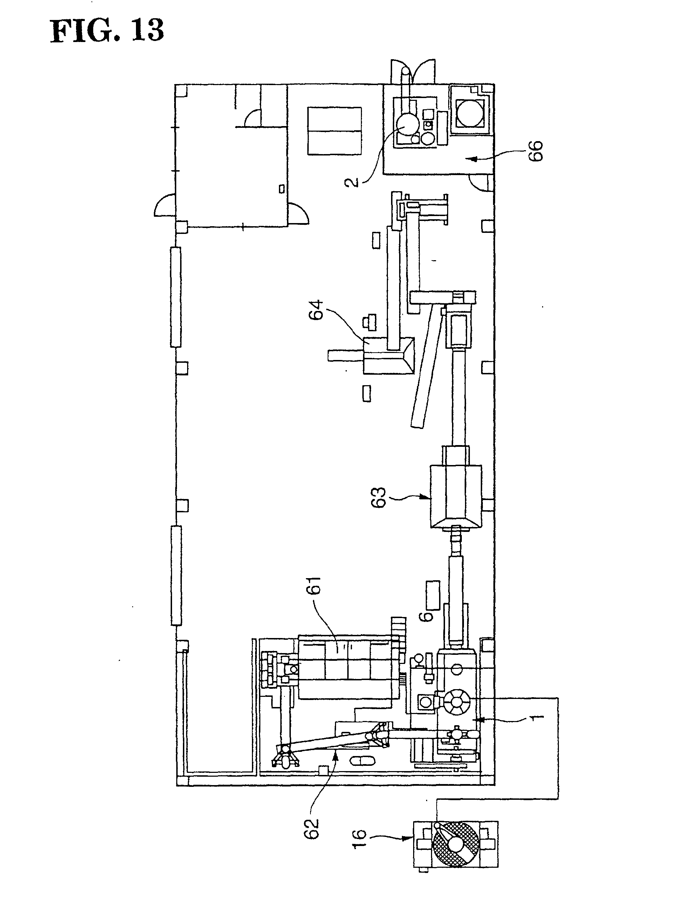

On the other hand, Fig 13 is a plan view showing an example in which the apparatus for producing organic fertilizer of the present invention is arranged into the plant, and the apparatus for producing organic fertilizer is configured so as to provide the raw materials from a raw material hopper 61 to the body 1 through a conveyor machine 63, as well as to convey the produced organic fertilizer that is exhausted from the body 1 to a fertilizer packing apparatus 64 through the conveyor machine 63 and accordingly, the production of organic fertilizer is consistently automated by using a pressure regulator, etc.

It should be noted that a boiler chamber 66, in which the boiler 2 is arranged, is located as an another chamber, and the cooling tower 16 is located outside the plant so as not to adversely thermally affect each other, and thereby, it enables that the inside of the plant keeps clean and the temperature of the plant is controlled to keep it comfortable. Furthermore, according to the apparatus for producing organic fertilizer of the present invention as described above, even if microbes become extinct due to some influence, it prevents the disadvantage such as surviving of the raw materials contained within the drum 8 with high moisture percentage or corrosion of the raw materials, as only the vacuum drying of the raw materials is continually conducted.

In addition, the process of producing the organic fertilizer as described above is a batch process for terminating the process of producing the organic fertilizer by putting a certain volume of raw materials into the drum 8 and producing organic fertilizer with the use of all of the raw materials, and the continuous process is also available to continuously produce the organic fertilizer by continuously putting raw materials at prescribed intervals.

Next, the embodiment of the method for producing microbes is explained. Although the described apparatus remains to be used, the object of the method is not to produce organic fertilizer, but to produce microbes, especially bacteria suitable for process, decomposition and fermentation of organic waste.

The method comprises a process of producing basic raw microbes and a process of changing the raw microbes to a mycology suitable for the particular organic waste that becomes the processing materials.

Firstly, explained is a process of producing basic raw microbes. In the process, the mixture of microbes to be incubated and base material suitable for incubation of the microbes to be incubated is put into the containing chamber 3, and heated under an atmospheric depression in order to incubate the raw microbes as shown in the aforementioned apparatus.

It is preferable that the heating temperature is within the scope between 120°C and 150°C. As to the scope of reducing the pressure, it is preferable that the boiling point of water is between 75°C to 15°C. The incubating time is approximately from 1.5 hours to 4 hours.

The microbes to be incubated become basic raw microbes . The basic raw microbes are indigenous microbes that exist in the leaf mould of the area where the aforementioned organic fertilizer is produced. Any particular microbe may be acceptable instead of indigenous microbes. Actinomyces, lactic acid bacteria, fermented soybeans bacteria or yeast publicly known is included in the particular microbes. It may be possible to mix plural microbes. A plurality of microbes is included in the indigenous microbes.

The preferable embodiment of the process is that rice bran and particular microbes or leaf mould from the bamboo groove, etc. is contained in the containing chamber 3 of the aforementioned producing apparatus, and the mixture of the rice bran and the particular microbes is added to the prescribed culture solution (organic incubational basic material) which was dissolved in water. As such culture solution, there is extract gathered by preserving the point of growth of flowers in brown sugar (natural green sap). As to flowers, flowers that grow in harsh circumstances are better among those that grow in an area where flowers are cultivated for the purpose of any process. Harsh circumstances refer to an area, the climate condition of which is more harsh than that of any other area such as higher or lower temperatures.

Next, after adjusting the degree of vacuum to be 60°C of the boiling temperature, the microbes are cultivated (fermented) for approximately 1.5 hours through 3 hours. Thereafter, a part of the microbes (0.1-10%) is left in the containing chamber, and the culture solution is added in a similar manner. Such step is repeated for a few days.

Next, microbes (mycology) suitable for the processing raw materials are produced according to the following steps. Culture comprising rice bran, approximately 10%-1% of processing raw materials to be processed by microbes and approximately 30%-5% of basic raw microbes are put into the containing chamber.

There are several kinds of processing raw materials, for example, all that are referred to as organic waste such as garbage, fishery prepared products or livestock dung or cow dung, etc. are applied to the processing raw materials. Thereafter, such culture/fermentation is continuously conducted on the same conditions of decompression and temperature as the fermenting process of the basic raw microbes.

After 1.5-3 hours, the incubation is continually conducted under the same conditions leaving 30%-0.1% of the culture in the containing chamber by adding rice bran and processing material, and such steps are repeated for a few days. As a result, microbes (microorganism group) suitable for the decomposing /fermenting process of the processing materials can be obtained. A plurality of the raw materials such as cow dung with garbage may become the processing materials. Accordingly, the breeding microbes are a combination of a plurality of microbes suitable for the decomposing and depositing process of each of the raw materials.

It should be noted that in this process, sea water of 30%-1% is put into the containing chamber with the processing raw materials. In the process of the passage culture in the containing chamber, only microbes having resistance to the salt persists. These microbes may preferably decompose the organic waste with high salinity.

Explained is a concrete example. Leaf mould of the bamboo grove in Oshima-gun, Kagoshima was gathered to be utilized. As processing raw materials, cow dung of the cattle raised in the same area as the leaf mould was used. At that time, sea water from the same area was added.

As a culture solution, extract obtained in the manner that 50% of flowers with strong growing ability in the same area such as a golden rod were utilized and mixed with 50% of brown sugar, and refrigerated for one week. The obtained microbes were microbes belonging to the actinomycetes.

Next, fermentation was conducted by mixing the obtained microbes with organic waste of cow dung, and using the apparatus under the following conditions.

99% of cow dung and 1% of culture of microbes were mixed and fermentation was conducted for 2 hours through 4 hours with the apparatus. As the result of analysis of the obtained organic fertilizer, the obtained organic fertilizer comprised the following component (in Table 1).

As shown in Table 1, it was confirmed that amount of nitrogen in the fermentation was considerably deer eased after the process compared with that before the process.

In this present invention, microbes for generating publicly known organic fertilizer such as each of the microbes that is described in the following patents: Japanese Patent Laid-Open Publication No. 2001-048687 of soil foundation material, Japanese Patent Laid-Open Publication No. 2001-046057 of novel microbes and organic material producing method by using the novel microbes, Japanese Patent Laid-Open Publication No. 2000-264767 of organic fertilizer producing method, Japanese patent Laid-Open Publication No. 2000-072581 of microbial organic compost producing method where sludge for papermaking is decomposed by microbes, Japanese Patent Laid-Open Publication No. 2000-072580 of granular activated sludge fertilizer and activated charcoal obtained from such fertilizer, Japanese Patent Laid-Open Publication No. 11-197635 of organic waste decomposing method and producing process of plant medium by decomposing method of the organic waste, Japanese Patent Laid-Open Publication No. 11-196886 of method and apparatus for producing useful material from refreshment wastes, method and apparatus for industrial alcohol, and method and apparatus for producing clear water, Japanese Patent Laid-Open Publication No. 11-103663 of a culture, microbial material and method for producing the culture and microbial material, Japanese Patent Laid-Open Publication No. 11-058325 of method for producing and using woody heat treated material, Japanese Patent Laid-Open Publication No. 10-262479 of multiple farming facilities using organic waste, Japanese Patent Laid Open Publication No. 10-236894 of method for producing specific liquid fertilizer, Japanese Patent Laid-Open Publication No. 10-174582 of activated mixed microbes and utilization of activated mixed microbes, Japanese Patent Laid Open Publication No. 10-167866 of organic fermented fertilizer and method of producing organic fermented fertilizer, Japanese Patent Laid-Open Publication No. 10-120483 of apparatus for producing fertilizer by using organic waste, Japanese Patent Laid-Open Publication No. 10-025182 of cylindrical fertilizer, Japanese Patent Laid-Open Publication No. 09-268089 of method for producing microbes material, Japanese Patent Laid-Open Publication No. 09-118576 of organic fertilizer and method for producing organic fertilizer, Japanese Patent Laid-Open Publication No. 09-048685 of method for producing organic fertilizer, Japanese Patent Laid-Open Publication No. 05-207816 of method for producing microorganism group of the incubational soil for processing microbes of clear water cake, Japanese Patent Laid-Open Publication No. 05-170579 of method for producing organic fertilizer, Japanese Patent Laid-Open Publication No. 05-070271 of method for producing solid fertilizer, and International Publication No. WO98/04263 of method for producing organic fertilizer.

Below described is an analysis of indigenous microbes (basic raw microbes or incubated microbes) explained in this embodiment.

| Classification in accordance with the gene of the isolation strain and odor after the cultivation | | |
|---|---|---|
| Strain | Generic Name | Smell |
| Aerobic A-a | Candida | none |
| Aerobic B-b | Arthrobacter | smelled |
| Aerobic B-c | Bacillus | none |
| Anaerobic A-a | Candida | smelled |
| Anaerobic A-b | Cnadida | none |
| Anaerobic B-c | Escherichia | smelled |
| Anaerobic B-d | Microbacterium | none |
| Anaerobic B-e | Arthrobacter | smelled |
| Reference: A= pig feed B=Piggery soil | | |

Although various strains were isolated, it has been clarified that all of the strains were known as enteric bacteria or soil microbes.
* Candida genus: Regarding eucaryotic Candida, this microbes is greatly distributed in the natural world, and is a kind of genus close to yeast where torula is also included. There are various kinds of Candida, and generally, it has a strong characteristic to decompose the organic matter to be aerobic or anaerobic strain and becomes a cause of decomposition of food as it disperses in the form of spore. Moreover, it has a useful kind that is used for brewing of soy sauce. This kind of microbe is more likely to be included to fodder for livestock so that it has high possibility to cause from fodder.
* Arthrobacter genus: This microbe is an aerobic gram positive microbe so that is makes no spore. It mainly epigeals in the soil and disassembles the organic matter in the soil to make it inorganics so that it is deemed to deeply become involved with material recycling. In this case, though this microbe is separated to both of aerobic and anaerobic, it is considered that anaerobic B-e is microaerophilicly bred by using slightly contaminated oxygen.
* Bacillus genus: Bacillus genus is also called as bacillus subtilis and attached to the soil or plant remains (such as rice straw) . Gram positive microbe forms spore with depending on the nutriture. This microbe is known to secrete various protease, lipase or the like outside cells and becomes involved with disassemble of the organic matter. If the barn uses dead grass or straw, this microbe is deemed to disperse from such dead grass or straw.
* Microbacterium genus: Aerobic gram positive microbe does not form any spores, and may be distributed or isolated from dairy product such as cheese.

The above are the characteristics of isolated microbe genus in this time, and the strain inhabiting in the barn are isolated. Regarding the relationship between bad smell and these fungus, all fungus that are isolated from feed (A) are Candida genus, and it is anticipated that these feed are fermented feed. Some kinds of these microbes are odorless or proceed aroma upon fermentation. In fact, two strains among three strains were odorless even upon being cultivated in the nutritive medium. These fermentable feed regulate the functions of the intestines so that they may keep the balance of the intestinal bacteria in good conditions and control the odor of fecaluria. The Soil bacteria were found from the piggery soil. Vacillus genus and Microbactehum genus were odorless even upon being cultivated in the nutritive medium so that they may engage in decomposition of organic materials with no odor. In consideration of the less occurrence of strong smell than in the case of other feeding methods, the piggery soils have a lot of these microbes. As to feed sample A, the microbes of Candida genus (A-a, A-b) are presumed to have any effect for restriction of the bad-smelling materials which occur in the intestine. Furthermore, as to soil sample B, it is considered that Baclillus genus and Microbacterium genus are bleeding as a decomposer which causes no bad smell.

The indigenous microbes of this invention reduce the N val by decomposing the nitrogen sources, and increase the ash contents (C amount) by decomposing the organic materials such as carbohydrates. Accordingly, they are possible to decompose the raw organic materials to increase the C/N value. Moreover, as described below, it is desirable that the indigenous microbes can grow under the strict circumstances such as hyperosmolality.

It was confirmed that the resistive microbes to the hyperosmolality described above, that is, the aforementioned microbes, which are explained to resistive microbes to the salinity (mixing microbes), were mainly constituted from the following three microbes: Shimose 1 which had been internatioanally deposited to the International Authority Depository Center, National Institute of Bioscience and Human-Technology, National Industrial Research Institute of Ministry of Economy, Trade and Industry addressed at 1-3, Tsukuba-shi 1-chome, Ibaraki, Japan on March 14, 2001 (Deposition No. FERM BP-7504), Shimose 2 (Deposition No. FERM BP-7505) and Shimose 3 (Deposition No. FERM BP-7506). These microbes are viable under the circumstances where salinity such as sodium chloride exists (e.g. in the case of the osmotic pressure is extremely high at the degrees of several hundreds mOsmol to 1000mOsmol) and comprise the functionality, by which organic waste of livestock dung, fishery product, garden stuff and meat, etc. or organic material including paddy or straw, defoliation, etc. are decomposed and fermented to produce the organic fertilizer. The characteristic of each microbe is explained as follows.

Shimose 1 is a novel variant belonging to the same Saccronyces genus as the yeast, and the medium of which is agar medium. The medium is composed of 100ml of refined water, 5.0 g of meat extract, 10.0g of peptone, 5.0g of sodium chloride and 15.0g of agar-agar. The temperature of the incubation is 30 Centigrade, and the term of the incubation is for three days. The medium is 7.0 pH. As the conditions of sterilizing, the temperature is 121°C, and the term is for 15 minutes. These microbes can be kept by the freeze-drying method (5°C).

Shimose 2 is a novel variant belonging to the same Saccronyces genus as the yeast, and the medium of which is YMmedium. The medium is composed of 1000ml of refined water, 3.0g of meat extract, 3.0g of malt extract, 5.0g of pepton, 10.0g of glucose, 20.0g of agar-agar. The incubating temperature is 28°C, and the incubating term is for 3 days. The medium is 6.2 pH. As the conditions of sterilizing, the temperature is 121°C and the term is 15 minutes. These microbes can be kept by the freeze-drying method (5°C).

Shimose 3 belongs to the gram-positive coccus, the medium of which is the agar media. The medium is composed of 1000ml of refined water, 5.0g of meat extract, 10.0g of pepton, 5.0g of sodium chloride and 20.0g of agar-agar. The incubating temperature-is 30°C, and the incubating term is for 3 days. The medium is 7.0 pH. As the conditions of sterilzing, the temperature is 121°C and the term is for 15 minutes. These microbes can be kept by the freeze-drying method (5°C).

One of the embodiment of the indigenous microbes of the present invention is microbes or mixing microbes consisted of at least one of the a forementioned Shimoses 1 through 3, and by which the result of the decomposition of the material organic waste is as shown in Table 1. More descriptions are shown in Table 2.

The decomposing rate is as follows. In the case of the dung fermentation, based on the residual ratio, the decomposition rate of the nitrogen is about 63% by calculating from the aforementioned analytical results. The processing time is two (2) hours. More specifically, in the case of the dung fermentation mixed with sawdust, the decomposition rate based on the nitrogen is 63.5% by the following calculation: (52g/kg-19g/kg) ÷52g/kg×100.

The microbes forming the organic fertilizer in connection with the present invention, during two (2) hours' processing time, the nitrogen decomposition rate of which is more than 40% when compared to the before and after the decomposition process, and there are microbes such as indigenous microbes, when compared between C/N value of organic materials before the decomposition process and C/N value of organic materials after the decomposition process, the C/N value after the decomposition process is more than 1.5 times the C/N value before the decomposition process, and it enables the decomposition, or fermentation preferably, under the circumstances of hyperosmolality. Namely, in the conventional microbes, it took more than one month to decompose organic materials, however, the present invention is capable of decomposing the organic materials approximately for 2 hours.

### Industrial Availability

The method of the present invention and an apparatus to realize the method, which are constituted as described above, are easy to produce organic fertilizer by mixing and holding microbes for organic decomposition and the raw materials in a containing chamber, evacuating the containing chamber in order to concurrently conduct the organic decomposition of the raw materials (fermentation) and the moisture adjustment (drying), and more specifically; the method and the apparatus of the present invention comprises drying of the raw materials by decompression inside of the containing chamber so as to exhaust the water not only from the surface but also from the inside of the raw materials and enlarge the surface on which microbes attach, and thereby, producing organic fertilizer from organic waste in a short time. Accordingly, the method can be used for producing microbes suitable for the disposal of the specific organic substrates in a short time with good efficiency.

At that time, the method can easily conduct the drying process without preparing the heat source for vacuum drying to a specific thermal control due to the vacuum drying by using the self heat of the raw materials as heat source in such a manner that the boiling temperature of the water in the containing chamber is not higher than that caused by the heat of fermentation due to the decompression of the inside of the containing chamber. However, the raw materials require some extent of thermal energy to prevent the temperature from decreasing due to heat liberation of raw materials, it is enough to heat the raw materials in heat that is more than the upper limit of the heat of fermentation, so that it is easy to provide the thermal energy.

In addition, the exhaust of water is easily conducted by exhausting moisture caused in the containing chamber in the process of producing organic fertilizer outside the containing chamber, and.cooling and condensing the moisture, on the other hand, it is possible to recycle the condensing water by using the exhausted water (condensing water) as a part of the cooling water for cooling the above moisture, and makes a constitution where the exhausted water is not released outside in a liquid condition so that it is possible to prevent adverse effects to environment.

It should be noted that although bad smell may be released outside in a gas condition, upon using the waste water as a part of the cooling water because cooling water is vaporized, the method of the present invention can prevent the bad smell by deodorizing the cooling water into the circulating route, for example, by making the cooling water ozonized water.

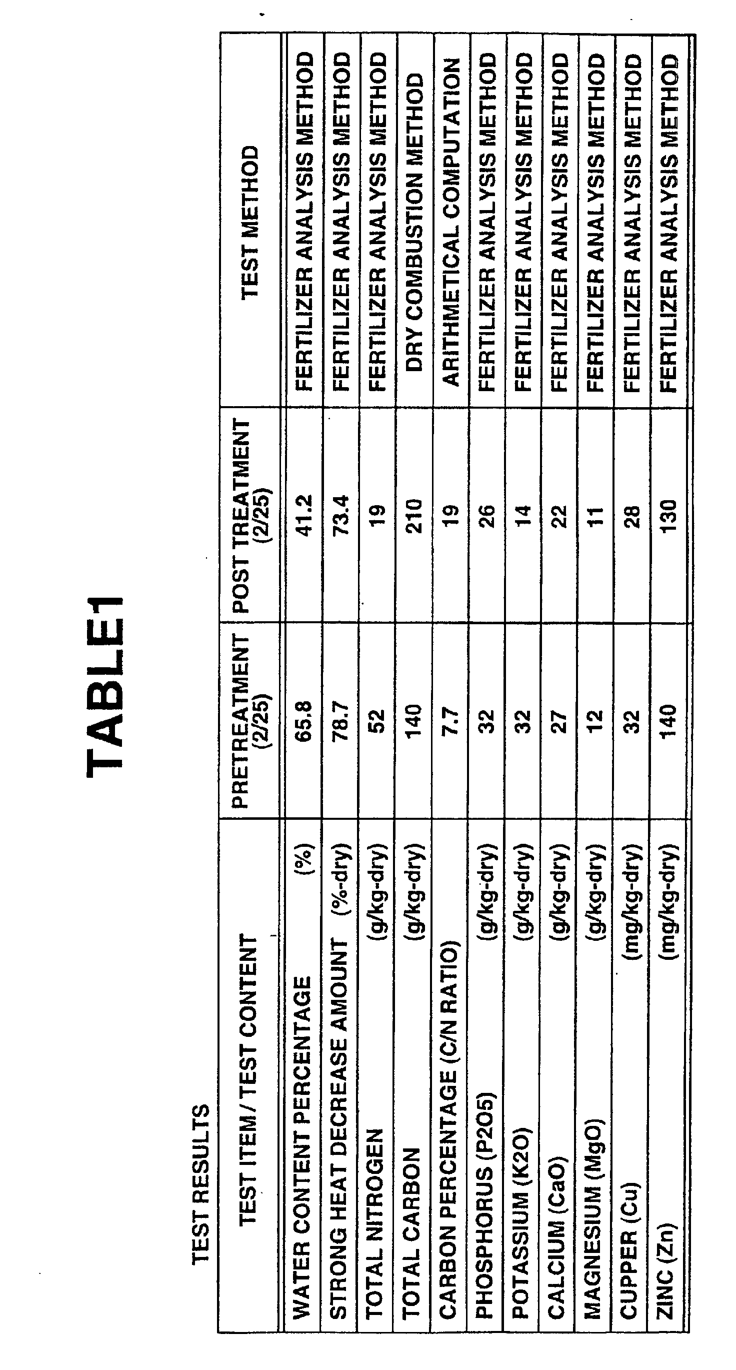

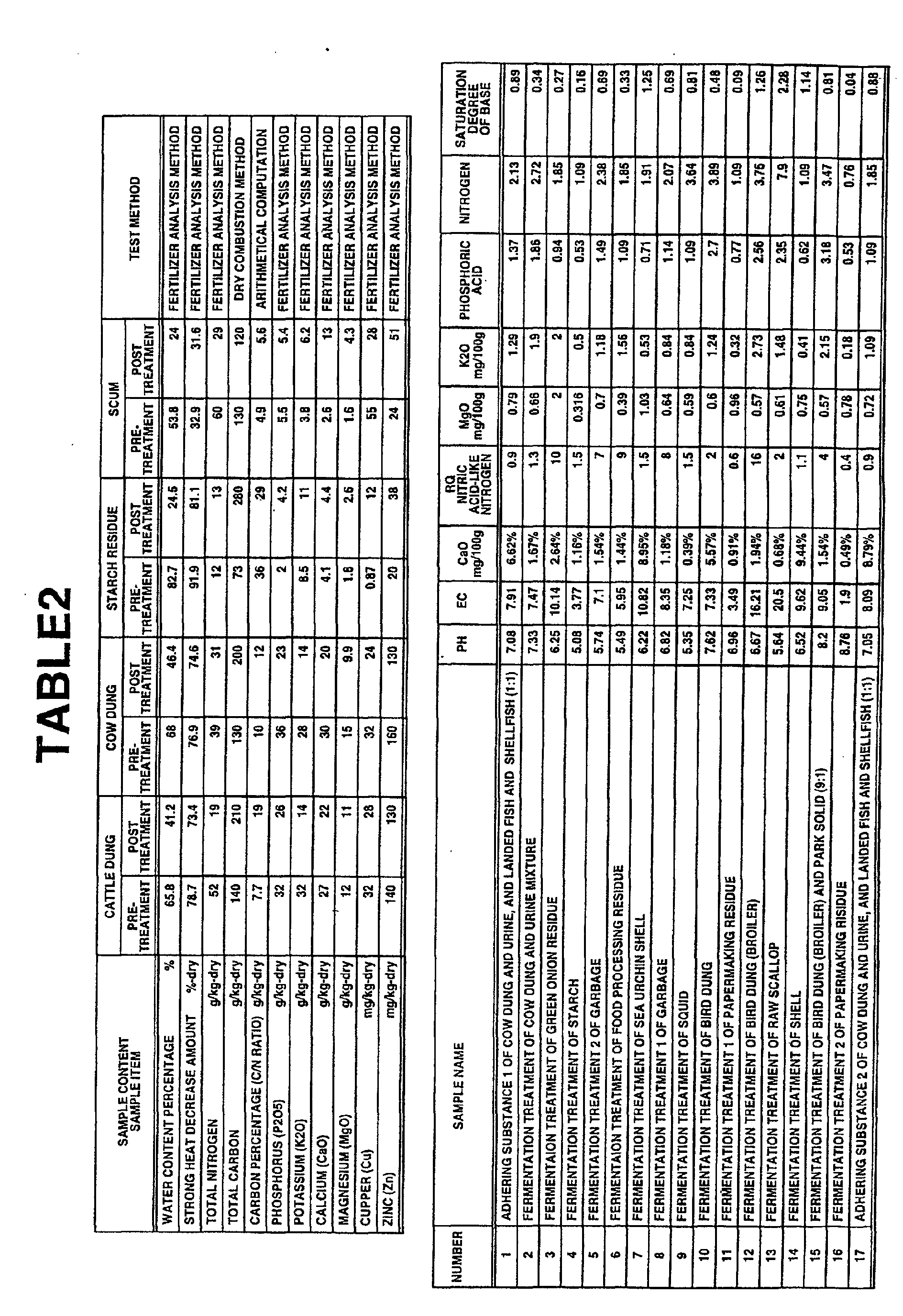

## Claims

1. A method for producing an organic fertilizer, wherein moisturized organic waste and microbes, which decompose organic material so as to compost, are mixedly contained in a containing chamber (3) which can be sealed but also freely opened and closed, comprising the steps of:
heating and decompressing the containing chamber (3) by sealing the containing chamber(3);
setting a boiling point of water in the containing chamber (3) to be below fermentation heat of the organic waste caused by the microbes in decomposing of the organic material;
vaporizing moisture of the organic wastes generated by the microbe; and
exhausting the moisture so as to produce the organic fertilizer by decomposing the organic material.

2. The method for producing the organic fertilizer according to claim 1, wherein the moisture exhausted from the organic waste is condensed by heat exchange with cooling water outside the containing chamber (3), the cooling water is air-cooled and circulated, and the liquid moisture caused by condensation is provided into a circulating passage as makeup water for cooling water.

3. The method for producing the organic fertilizer according to claim 2, wherein cooling water is deodorized into the circulating passage of the cooling water.

4. A manufacturing device of an organic fertilizer, comprising a containing chamber (3) where moisturized organic wastes and microbe, which decompose organic material so as to compost, are contained and a heating device (2) to heat said containing chamber (3),
wherein said containing chamber (3) comprises a stirring part (9) of mixing said organic wastes and microbe in the container (3) and said containing chamber(3) is constituted to enable to be sealed, and a decompressing device of decompressing the atmospheric pressure into the containing chamber (3) is connected to a side of said containing chamber (3), and said decompressing device is driven so that the boiling point of water in said containing chamber (3) is set below the fermentation heat of the organic wastes caused by the microbe in decomposing the organic material.

5. The device according to claim 4,further comprising a condensing device (6) for liquefying the moisture in vapor is connected to the side of said containing chamber (3), and a guiding part (12) for guiding moisture in vapor caused by decompressing inside said containing chamber (3) set up between said condensing device (6) and the side of said containing chamber (6), and wherein said condensing device (6) is constituted for liquefying the circulating cooling water and said moisture in vapor by heat exchange.

6. The device according to claim 5, further comprising a cooling device (16) for air-cooling the cooling water set into the circulating passage for the cooling water, and a leading part for leading the liquid moisture caused by condensation between the condensing part (6) and said containing chamber (3) into the circulating passage for the cooling water.

7. The device according to claim 6, wherein the condensing device (6) comprises a moisture pass-age (13) for moisture in vapor and a cooling passage (14) for cooling water independently each other, both of the passages (13) and (14) being adjacently arranged to be capable of heat exchange between the moisture in vapor and the cooling water, and the condensing device (6) further comprising an exhaust port (6a) for exhausting liquid moisture caused by condensation in the moisture passage for moisture, a vacuum pump (4) in the form of stream, driven by the stream, to said exhaust port (6a), and wherein an output stream of said vacuum pump (4) is exhausted into the cooling passage of the cooling water.

8. A manufacturing method of microbe suitable for disposing organic wastes, comprising the steps of;
mixing an organic substrate including a moisture, an organic waste to be disposed and a microbe suitable for the disposal of the organic wastes in a containing chamber (3) which is capable of be sealed but also freely opened and closed;
heating and decompressing the container (3) by sealing the containing chamber (3);
setting a boiling point of water in the containing chamber (3) to be below fermentation heat of the organic wastes caused by the microbe in decomposing the organic material;
vaporizing moisture of the organic wastes generated by the microbe;
exhausting the moisture so as to complete incubation of the microbe; and
removing the microbe from the container.

9. The method according to claim 8, wherein material, the tolerance of which the microbe to be obtained in incubating the microbe is mixed to the organic substrates.

10. A method according to claim 9, wherein the material is sea water.

11. A manufacturing method of microbe suitable for the decomposing process of organic wastes, comprising the steps of;
mixing the organic wastes to decompose so as to form organic substrate for incubation of microbe and material, a tolerance of which the microbe to be obtained; and
incubating the microbe by the organic substrate.
